# FASCICULE DE BREVET EUROPEEN

(11) **EP 0 703 390 B1**
(45) Date de publication et mention de la délivrance du brevet: **14.11.2001**
(21) Numéro de dépôt: 95870105.4
(22) Date de dépôt: 20.09.1995
(51) Int. Cl.: F16K 7/18, F16K 11/02, B01D 53/02

(54) **Porcédé et dispositif de séparation de gaz par adsorption**
Verfahren und Vorrichtung zur Trennung von Gaskomponenten durch Adsorption
Method and device for separating gas components by adsorption

(30) Priorité: 21.09.1994 BE 9400853
(43) Date de publication de la demande: 27.03.1996
(73) Titulaire: SYNERGAL S.A., 6110 Montigny-le-Tilleul (BE)
(72) Inventeur: Linard, Daniel, B-6110 Montigny-le- Tilleul (BE)
(74) Mandataire: Van Malderen, Michel

(56) Documents cités:
- WO-A-94/04249
- DE-A- 1 650 394
- DE-C- 895 303

## Description

### Objet de l'invention.

On connaît diverses techniques de séparation des composants d'un mélange de gaz, notamment par adsorption sélective. Cette technique repose sur l'utilisation d'une matière adsorbante telle que la zéolite, et combine des réacteurs fonctionnant en suites de phases alternées d'adsorption et de désorption.

La présente invention concerne un procédé et un dispositif basés sur l'adsorption sélective de gaz de ce type.

### Etat de la technique.

La plupart des dispositifs connus comportent un nombre élevé de vannes devant subir un grand nombre d'opérations d'ouverture et de fermeture pour l'admission des gaz à traiter et l'échappement séquentiel des gaz ayant subi l'adsorption sélective. La conception de ces vannes et leur entretien constituent la difficulté majeure des solutions de l'état de la technique.

Selon le document WO94/04249, un procédé de séparation, dans une enceinte divisée en mêmes compartiments séparés, étanches, qui sont garnis chacun d'une matière adsorbante choisie en fonction du gaz à traiter et qui sont agencés chacun pour temporairement autoriser l'admission du gaz à traiter et l'évacuation d'au moins un des composants choisis de ce gaz tandis que le ou les autres composants de ce dernier sont adsorbés par la matière susdite, consiste à admettre le gaz à traiter dans un des compartiments jusqu'à ce qu'une pression déterminée soit atteinte pendant que dans les compartiments suivants, et dans l'ordre, à partir de celui qui est le plus proche dudit compartiment où la mise sous pression du gaz s'effectue, on procède aux opérations suivantes : on admet, dans au moins un compartiment, du gaz à traiter et on y autorise l'échappement du composant choisi susdit, on laisse, dans le compartiment suivant, chuter la pression pour procéder naturellement à une désorption partielle du ou des composants non choisis du gaz, on injecte, dans le dernier compartiment, un fluide de rinçage pour assurer la désorption finale de la matière précitée.

On y décrit également un dispositif pour la mise en oeuvre de ce procédé basé sur des compartiment semblables, à double fond, qui sont séparés, étanches, et garnis chacun d'au moins une même matière adsorbante reposant sur le fond supérieur et qui sont pourvus chacun de deux orifices réalisés dans une paroi du compartiment et destinés sélectivement au passage du gaz à traiter, de ses composants et du fluide de rinçage, l'un des orifices étant disposé entre les deux fonds et l'autre au niveau de la matière adsorbante, un passage étant prévu entre le fond supérieur et communiquant avec un espace du même compartiment situé à l'opposé des orifices susdits et délimité par une grille s'étendant transversalement au fond supérieur, une seconde grille étant agencée sensiblement parallèlement à la paroi présentant les deux orifices susdits et étant disposée à proximité de cette dernière dans le compartiment, la matière adsorbante étant maintenue entre ces deux grilles, lesdits compartiments étant fixes et régulièrement répartis autour de moyens de distribution comprenant un cylindre distributeur agencé pour pouvoir tourner autour de son axe afin de coopérer tour à tour avec les orifices susdits de chacun des compartiment pour permettre sélectivement le passage du gaz à traiter, des composants et du fluide de rinçage précités, des moyens étant prévus, d'une part, pour entraîner en rotation le cylindre distributeur soit en continu, soit pas à pas et, d'autre part, pour fournir aux moyens de distribution le gaz à traiter et le fluide de rinçage ainsi que pour permettre l'évacuation du composant choisi et du ou des composants non choisis, des moyens d'étanchéité étant prévus pour isoler sélectivement les uns des autres les élément d'acheminement du gaz à traiter, du fluide de rinçage et des composants choisis et non choisis respectivement à travers les moyens de distribution et les compartiments.

De par sa conception même, à savoir du fait qu'il comporte un cylindre distributeur agencé pour tourner autour de son axe afin de coopérer tour à tour avec les orifices des compartiments, les durées des différentes étapes se déroulant dans chacun des compartiments sont nécessairement identiques, que l'opération se déroulant dans chaque compartiment concerné soit une étape d'adsorption, de désorption ou autre, par exemple de rinçage.

### But visé par l'invention.

En pratique, il est important de pouvoir réaliser la séparation de gaz, et en particulier la séparation de l'oxygène et de l'azote de l'air, par un procédé séquentiel et alternatif d'adsorption et de désorption dont les phases ne peuvent durer que quelques secondes, d'une part en adaptant la durée réelle nécessaire, et d'autre part en assurant une ouverture et une fermeture très rapide des vannes par des moyens simples, efficaces et capables d'assurer sans usure excessive un grand nombre d'opérations d'ouverture et de fermeture. Il convient de plus de disposer de moyens permettant de détecter les séquences adéquates pour commander les différentes vannes.

Le procédé de l'invention repose sur l'observation que les temps nécessaires aux différentes étapes des phases d'adsorption et de désorption ne sont pas nécessairement identiques.

En conséquence, pour assurer la rentabilité du procédé, il convient d'adapter la durée de ces différentes étapes au temps réellement nécessaire en réduisant à des délais très courts le temps nécessaire à l'ouverture et à la fermeture, ce qui nécessite un équipement spécifique.

### Eléments caractéristiques de l'invention.

L'invention concerne un procédé de séparation de composants d'un mélange de gaz par adsorption sélective sur une matière adsorbante dans des réacteurs fonctionnant en cycles d'adsorption et de désorption séquentiels, comportant des étapes successives d'admission des gaz à traiter et de mise sous pression en vue de réaliser une adsorption sélective, un échappement préférentiel du composant moins adsorbé et une désorption au moins partielle à pression réduite du composé adsorbé préférentiellement, suivie de préférence d'une purge de désorption finale, caractérisé en ce que les phases d'adsorption et de désorption sont commandées à l'aide de vannes déroulantes montées dans des conduites ou des portions de circuit connectées au réacteur et qui contrôlent individuellement les admissions et les échappements de gaz nécessaires au fonctionnement du réacteur.

De préférence, les phases d'adsorption et/ou de désorption sont commandées en fonction du front d'adsorption dans le réacteur.

Ceci repose sur le fait que le front d'adsorption peut être détecté en fonction des variations de température et/ou de pression dans le réacteur.

L'invention concerne également un dispositif de séparation composants d'un mélange de gaz par adsorption sélective sur une matière adsorbante dans des réacteurs fonctionnant en cycles d'adsorption et de désorption séquentiels, comportant des étapes successives d'une admission des gaz à traiter et une mise sous pression en vue de réaliser une adsorption sélective, un échappement préférentiel du composant moins adsorbé et une désorption au moins partielle à pression réduite du composé adsorbé préférentiellement, suivie de préférence d'une purge de désorption finale, caractérisé en ce que les admissions et les échappements de gaz nécessaires à son fonctionnement, commandés individuellement par une vanne montée dans une conduite ou une portion de circuit. Cette vanne est constituée par une paroi perforée, de préférence une grille à fines ouvertures, et par une membrane amovible en un matériau souple, disposée sous forme d'une courroie montée sur des poulies, galets ou cylindres ou tous éléments similaires, qui est disposée de manière qu'un des brins de ladite courroie puisse recouvrir l'ensemble de la paroi perforée, la courroie pouvant être montée soit librement, soit en étant entraînée par un dispositif de commande, en rotation sur les poulies et l'ensemble de la courroie et de ses poulies pouvant effectuer un mouvement de translation depuis une position d'ouverture maximale libérant totalement les perforations jusqu'à une position de fermeture totale couvrant totalement les perforations.

Ce dispositif comporte, selon une première forme d'exécution, une vanne à une seule voie comportant une grille à fine ouverture disposée dans un conduit et une ou plusieurs membranes amovibles pouvant pivoter sur un axe.

Ce dispositif peut également comporter, selon une seconde forme d'exécution, une vanne à voies multiples comportant plusieurs grilles à fine ouverture et au moins une membrane amovible et pouvant être déplacée par rotation pour couvrir différentes grilles.

Selon une forme d'exécution particulièrement préférée, le réacteur est composé d'un réservoir muni d'une entrée d'air dans sa partie supérieure et rempli de matière active d'adsorption, ainsi que d'une zone de captage du front de saturation de ladite matière.

### Brève description des figures.

- La figure 1: représente une vue en coupe d'une vanne déroulante à voie unique disposée dans un conduit, pouvant être utilisée selon l'invention;
- Les figures 2 et 3: sont des vues en coupe respectivement longitudinale et transversale d'une vanne déroulante à voies multiples convenant également selon l'invention;
- La figure 4: représente un diagramme d'un cycle d'adsorption/désorption de gaz dans le quel le temps figure en abscisse et la pression en ordonnée;
- La figure 5: correspond à la figure 4 pour l'abscisse, le débit étant exprimé en ordonnée;
- La figure 6: représente le schéma d'une installation convenant pour la séparation de l'oxygène et de l'azote au départ de l'air et
- Les figures 7 et 8: représentent respectivement le schéma d'une conception particulière d'un réservoir avec détection du front de saturation et "en vis-à-vis "l'évolution selon un diagramme de coordonnées température/temps.

### Description d'une forme d'exécution préférée de l'invention

L'utilisation de vannes du type qualifié de "vanne déroulante" répond aux exigences présentées et permet d'accroître fortement la rentabilité des installations de séparation de gaz par adsorption.

La vanne déroulante, par la légèreté de son équipement mobile, convient tout particulièrement, car elle peut réagir en quelques fractions de seconde alors qu'une vanne papillon classique, pilotée par vérins, met de 3 à 5 secondes pour s'ouvrir et se fermer.

Ce type de vanne déroulante dans son principe est connu par le document DE-A-1650394.

Il semble cependant que ce type de vanne n'ait connu aucun développement commercial. Ceci résulte probablement du fait qu'il n'existait pas de débouchés techniques pour ce type de vanne, et d'autre part du fait que la conception même des solutions proposées n'était pas directement transposable pour une application industrielle.

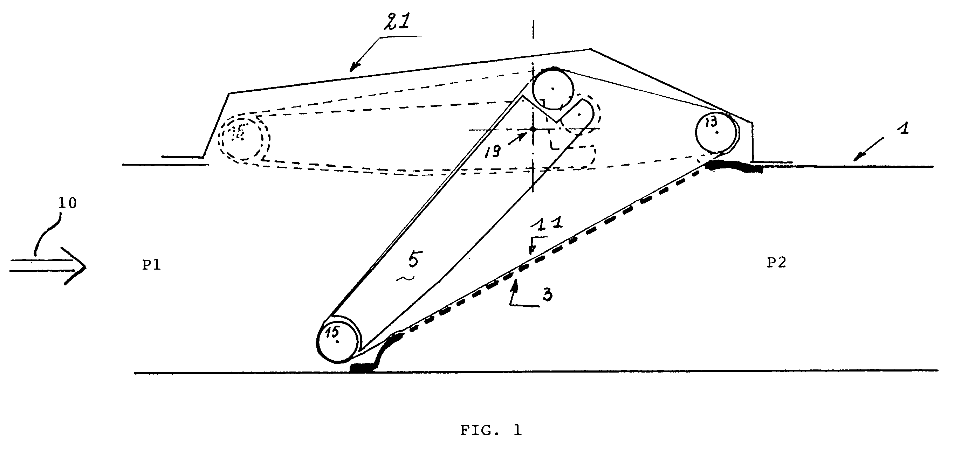

Le principe de la vanne déroulante ainsi que représenté à la figure 1 réside dans le fait que dans une conduite portant le repère général 1 est disposée une paroi pourvue des perforations 3 recouvrable par un ou plusieurs éléments d'obturation 5.

Chaque élément d'obturation 5 est en fait constitué par une courroie 11 montée en boucle sur les poulies de renvoi 13, 15.

Dans le cas illustré à la figure 1, on a représenté une paroi perforée 3 qui est de préférence inclinée par rapport à l'axe longitudinal de la conduite selon un angle d'environ 45°. Cette paroi perforée 3 pourrait également être perpendiculaire à cet axe ou se présenter sous un angle différent.

Afin d'assurer l'obturation des perforations, l'élément portant le repère général 5 constitué par la courroie 11 montée sur les poulies 13 et 15 peut être amené dans la position représentée en trait plein dans la figure 1. Dans ce cas, la différence de pression P > P2 régnant dans le conduit par suite de la circulation du fluide indiqué par la flèche, suffit à appliquer la membrane constituant la courroie contre les obturations.

Ce dispositif d'obturation peut, en vue de l'ouverture, être relevé comme indiqué, essentiellement par pivotement par rapport à un axe coïncidant avec celui de la poulie 13 pour amener l'élément d'obturation 5 dans un logement recouvert d'un capot 21 pratiqué sur la paroi du conduit 1 (qui en l'occurrence présente une section rectangulaire).

L'intérêt de la forme d'exécution selon l'invention est le fait que l'élément d'obturation 5 est constitué par une courroie 11 montée (en l'occurrence librement) sur les poulies 13 et 15 et le fait que ce dispositif est d'abord facile à manoeuvrer et qu'ensuite par la conception particulière représentée, l'actionnement sous l'action d'une commande dont l'axe porte le repère 19, provoque d'abord une libération des orifices inférieurs de la tôle perforée 3 accompagnée d'un léger mouvement de déplacement de la courroie 11.

A mesure que la commande 19 ramène l'élément d'obturation 5 de la position représentée en trait plein vers la position représentée en pointillé, un plus grand nombre de perforations vont s'ouvrir et libérer le passage de manière croissante.

Le mouvement de la courroie a pour conséquence que la zone d'application de la courroie sur les perforations n'est pas toujours la même, ce qui contribue à prolonger la durée de vie de la courroie et éviter le "marquage" sur la courroie des perforations de la paroi 3.

Les courroies peuvent bien entendu être réalisées en toute matière convenable présentant une résistance mécanique suffisante. Conviennent tout particulièrement, lorsque des gaz corrosifs sont par exemple présents dans le fluide transporté, les résines fluorées du type "Teflon"®.

Pour certaines applications, il est cependant envisageable de recourir à d'autres matériaux tels que par exemple une fine tôle d'acier inoxydable, ou des produits composites ou une toile métallique ou du type "Kevlar"® enduite, etc.

Contrairement aux indications du document DE-A-1650394, il faut éviter d'utiliser une lame d'acier recouverte d'une pellicule de caoutchouc sous peine d'obtenir très rapidement un décollage de cette pellicule (par desquamation ou délamination).

Du fait que deux métaux ou deux matériaux identiques en contact dynamique donnent inévitablement du grippage par accrochage moléculaire, il convient d'avoir des surfaces de matières différentes en contact dynamique.

Selon l'invention, on propose en particulier de travailler avec un noyau central en polymère et une courroie en acier inoxydable ou l'inverse.

Toutes matières assez résistantes pour l'utilisation décrite peuvent être envisagées pour autant qu'elles ne soient pas identiques.

Le choix des matériaux s'effectuera essentiellement en fonction de la nature chimique et physique des fluides transportés et éventuellement de la présence ou non de certaines particules solides.

Il convient de noter qu'il n'y a pas de nécessité de réaliser des ajustages très précis, notamment des usinages de haute précision siège/soupape. Il suffit que la longueur du brin 11a entre les poulies 13 et 15 soit suffisante pour recouvrir les perforations en vue d'atteindre le résultat souhaité. La présence de matières solides dans le fluide n'a pas non plus d'influence néfaste.

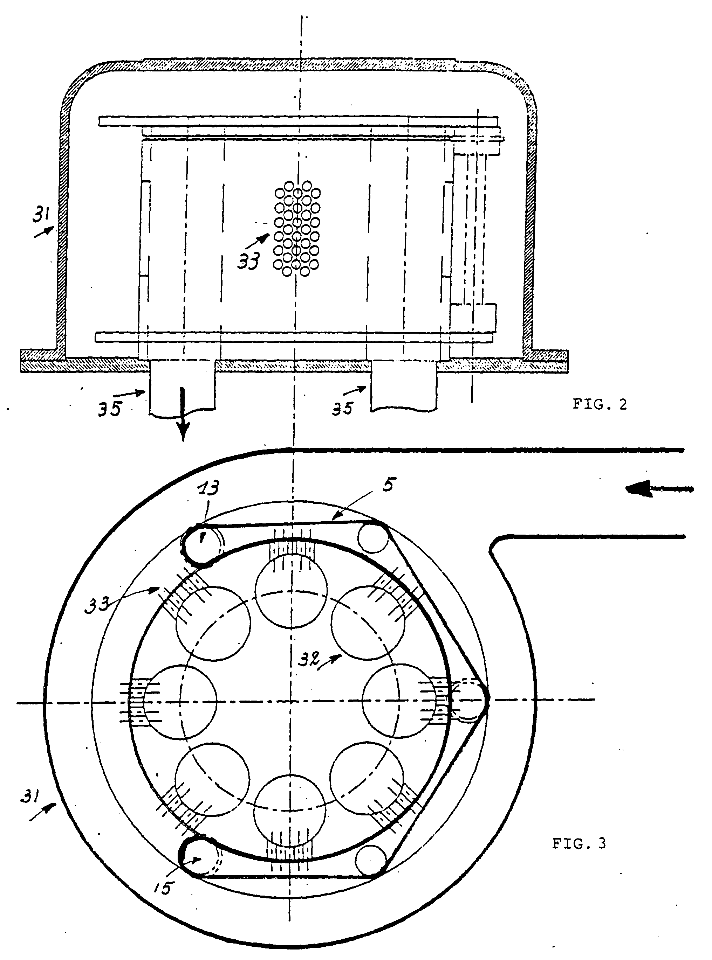

La forme d'exécution des figures 2 et 3 repose sur un principe similaire à ce qui a été décrit pour la figure 1, mais appliqué à un système de vanne à voies multiples.

Le corps de la vanne se présente sous forme d'un corps cylindrique fermé par un fond à une extrémité. Dans la masse de ce corps cylindrique se trouvent (dans le cas représenté) des conduits 32 comportant des parois perforées 33.

En l'absence d'un dispositif d'obturation, le fluide entrant peut pénétrer dans les huit conduits 32 et est distribué vers huit sorties 35 disposées au fond du corps cylindrique.

L'admission du fluide s'effectue latéralement dans le sens représenté par la flèche.

Une courroie 5, de forme et de dimension appropriées, est montée sur des poulies 13 et 15 et fonctionne essentiellement comme dans le cas de la figure 1, à cette différence près que la courroie est ici positionnée par une cage en rotation autour du noyau central, cette cage déroule la courroie et la positionne en face des conduits à obturer.

Au lieu d'une courroie 5 solidaire de la cage mobile obturant cinq conduits sur huit, on pourrait monter sans difficulté plusieurs courroies permettant de varier le cycle des ouvertures et obturations.

Ceci s'effectue avantageusement avec une rotation simultanée des courroies sur leurs poulies respectives et donc de manière rapide et sans détérioration des courroies.

Il s'agit bien entendu d'une forme d'exécution donnée à titre d'illustration. C'est ainsi que des conduits peuvent être prévus pour créer une, trois, cinq, six,... voies. Il est également possible de disposer, par exemple dans la forme d'exécution représentée comportant huit voies, plusieurs courroies ce qui permet d'admettre successivement le fluide vers une des ouvertures de sortie 35 au choix, en obturant les ouvertures de sortie restantes.

Ceci implique bien entendu des dispositions provoquant un déplacement circulaire des poulies par rapport à l'axe longitudinal central du capot 31.

De nombreuses variantes d'exécution sont possibles en fonction des résultats souhaités.

Les dimensionnements, choix de matière sont largement quelconques et sont bien entendu adaptés au but poursuivi, aux matières fluides transportées, aux vitesses de circulation des fluides et aux vitesses de permutation qui sont souhaitées.

Ce type de vanne convient à de nombreux types de séparation telles que la séparation O₂/N₂ au départ de l'air, la séparation de l'hydrogène au départ de différents mélanges en contenant, la séparation du dioxyde de carbone au départ du gaz naturel, etc.

La mise en pratique de la technique de l'invention sera décrite, à titre d'illustration, en se rapportant à la séparation de l'azote de l'air dans le but de produire de l'oxygène par l'emploi de zéolite comme matière adsorbante, qui adsorbe préférentiellement l'azote à l'oxygène.

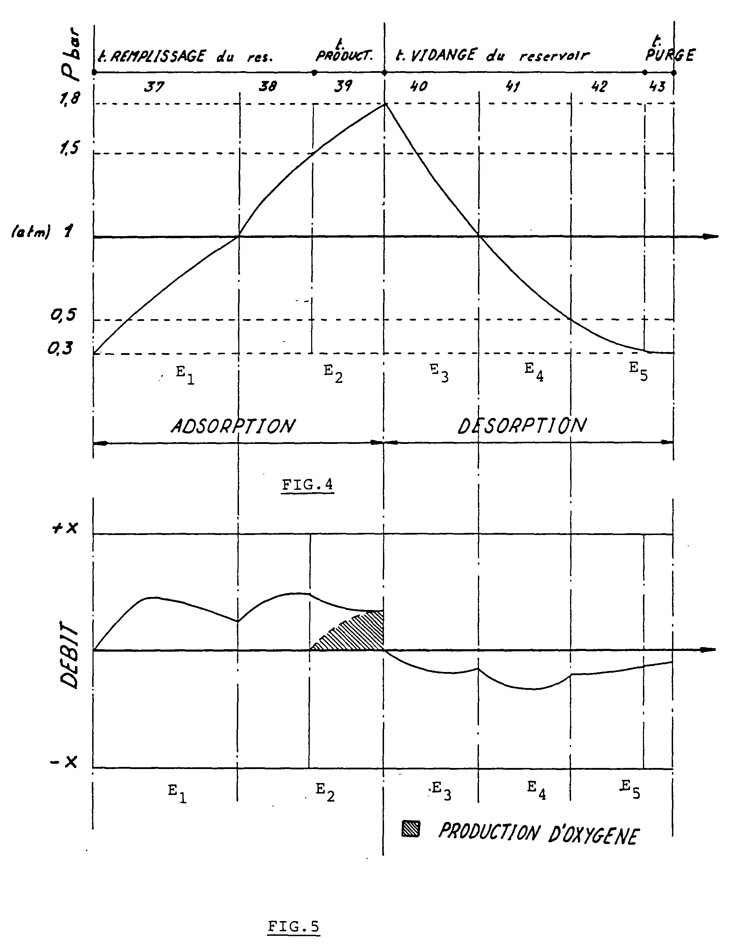

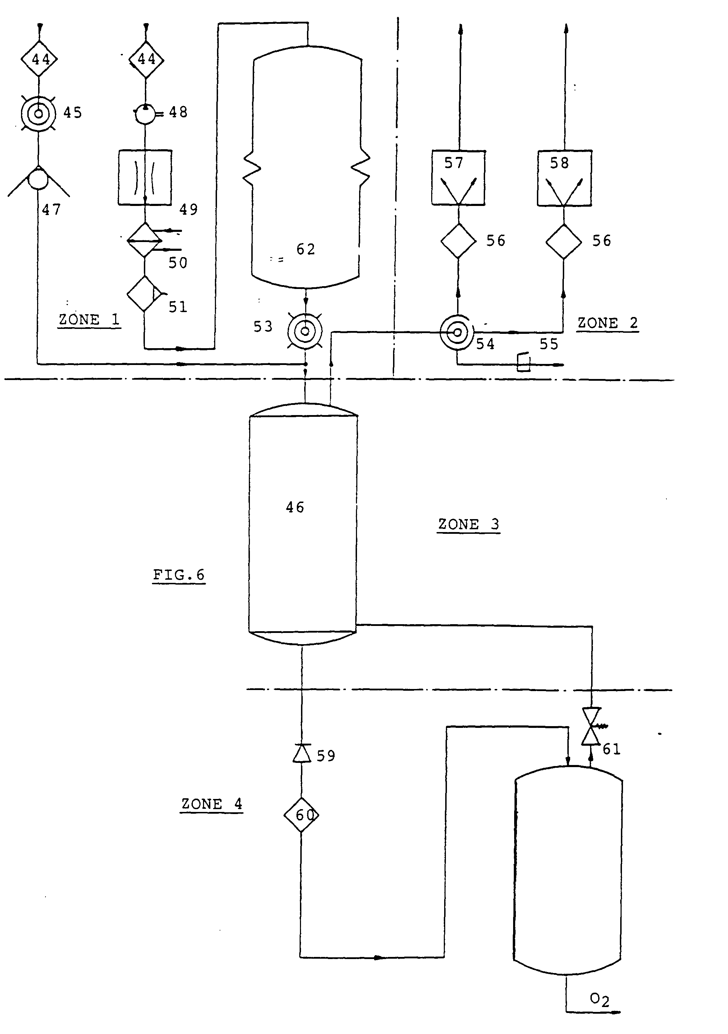

Dans les diagrammes des figures 4 et 5, les différentes étapes opératoires E1 à E5 sont figurées en abscisse.

Les étapes E1 et E2 de la phase d'adsorption sont constituées par l'admission d'air atmosphérique (E1) et la compression de cet air et la production d'oxygène (E2). Ces étapes E1 et E2 couvrant l'adsorption peuvent être également divisées en une zone de temps 37 et 38 de remplissage du réservoir et une zone de temps 39 de production. De même, la phase de désorption (E3 à E5) comporte une étape E3 de mise à l'atmosphère, une étape E4 d'échappement préférentiel du gaz le moins adsorbé et une étape E5 d'échappement du gaz le plus adsorbé et de purge, en l'occurrence de purge d'oxygène. La vidange du réservoir est représentée en zones de temps 40, 41 et 42, et le temps de purge en 43.

La production d'oxygène est représentée dans la figure 5 par la zone hachurée.

L'installation représentée schématiquement à la figure 6 comporte plusieurs réservoirs 46 indépendants contenant la zéolite et dans lesquels se déroulent successivement les étapes d'adsorption/désorption des gaz. Cette structure permet des récupérations d'énergie, soit par admission d'air atmosphérique filtré et éventuellement séché pendant que d'autres réservoirs sont en travail, soit par récupération directe ou indirecte des énergies de détente lors de la désorption des gaz occlus dans les matières actives. Cette détente peut être utilisée pour comprimer, dans une machine réceptrice d'énergie, les fluides entrant dans un autre réservoir qui ne se trouve évidemment pas dans une même phase de séquence.

Chaque réservoir 46 passe cycliquement par les phases suivantes. Après avoir été vidé à la pompe à vide (zones 40, 41, 42 et 43), le réservoir reste rempli par de l'air atmosphérique ou comprimé (zone 37). Il est ensuite gonflé jusqu'à la pression du réservoir d'oxygène (zone 38). Quand la pression intérieure devient supérieure à la pression de stockage, un clapet automatique ou piloté permet de refouler l'oxygène dans le réservoir de stockage jusqu'au moment où l'arrivé du front de saturation est détectée par des capteurs de valeurs physiques, par exemple pression et/ou température dont une fonction donne l'ordre de fermer la vanne d'admission d'air du compresseur.

Dès ce moment, la pression diminue (zone 40) par échappement vers l'atmosphère via ou non une turbine de récupération jusqu'à une pression de P = 1 atm.

Les zones 41 et 42 correspondent à la mise en dépression du réservoir par les pompes à vide afin de désorber au maximum la matière active.

La zone 43 correspond à l'injection d'oxygène à contre-courant permettant de refouler hors du réservoir les molécules d'azote éventuellement encore présentes dans l'espace intergranulaire de la matière active.

La passage des zones 39 à 40, 40 à 41 et 41 à 42 se fait par une vanne déroulante du type décrit, dont l'admission correspond à une sortie du réservoir. Elle est donc positionnée, par rapport au réservoir, dans le sens contraire de celles qui distribuent vers le réservoir l'air atmosphérique ou l'air des compresseurs, soit au passage de la zone 43 à 37 et de 37 à 38.

L'admission de l'oxygène de purge (zone 43) peut être réalisée par une électrovanne (faible débit) qui permet une injection d'oxygène préalablement fabriqué et stocké dans le réservoir de stockage.

A la figure 5, on a représenté les débits d'entrée dans le réservoir. Ces débit seront bien entendu négatifs lorsqu'ils sont sortants ainsi que lors de la purge où la ou les pompes à vide restent en service.

Dans l'installation de la figure 6, on dispose d'au moins deux alimentations de gaz à traiter via des filtres (zone 44). L'entrée d'air atmosphérique est suivie d'une vanne déroulante (zone 45) qui distribue successivement l'air atmosphérique au réservoir de travail 46 via un clapet anti-retour 47; ceci correspond à la phase 37. Aux phases 38 et 39, via des filtres 44, on alimente aussi le compresseur 48.

L'acquisition des valeurs de pression et de débit à des fins de régulation est effectuée par un régulateur 49 qui est suivi par un réfrigérant 50 et une purge 51 pour éliminer l'eau condensée.

L'air comprimé est partiellement séché et stocké dans un réservoir 52.

Une deuxième vanne déroulante d'admission 53 permet d'alimenter en zone 38 le réservoir contenant la matière active, en l'occurrence la zéolite.

A la fin de la zone 39, qui est la zone de production d'oxygène qui a vu le passage de l'oxygène produit au travers du clapet 59 vers le réservoir de stockage, l'oxygène passe par des filtres 60 qui permettent de récolter éventuellement les poussières de matière active tout comme les filtres 56 protègent les pompes à vide.

Dès la fermeture de la vanne 53, la pression dans le réservoir diminue et le clapet 59 se ferme automatiquement.

Quand la vanne 53 se ferme après détection de l'arrivée du front d'adsorption, on peut, via la vanne déroulante 54 équipant chaque réservoir 46, mettre les réservoirs successivement à l'atmosphère, via ou non une turbine 55, ensuite vers les pompes à vide 57 et 58 via des filtres 56.

Quelques secondes avant la fermeture totale de la vanne 54, on ouvre la vanne de purge d'oxygène 61, que l'on refermera à la fermeture de la vanne déroulante 54 et l'on peut recommencer une séquence complète.

Les autres réservoirs suivent exactement la même suite de phases. La caractéristique essentielle est que la durée des phases est variable, chaque vanne déroulante pouvant être pilotée séparément.

Cette particularité permet de pouvoir faire varier la durée des phases de base contrairement à ce qui est réalisé dans le document WO94/04249, qui utilise un distributeur dont toutes les phases sont identiques dans une séquence. La durée de ces phases est immuable dans ce cas, eu égard à la réalisation spécifique du distributeur.

D'autre part, dans ce même document, on se rend compte qu'il est extrêmement difficile, sinon impossible, de réaliser des étanchéités entre surfaces tournantes, le poids de l'équipage mobile étant extrêmement important on ne peut non plus se permettre pour des grands débits de réaliser des ouvertures ou des fermetures rapides sans dommage technique.

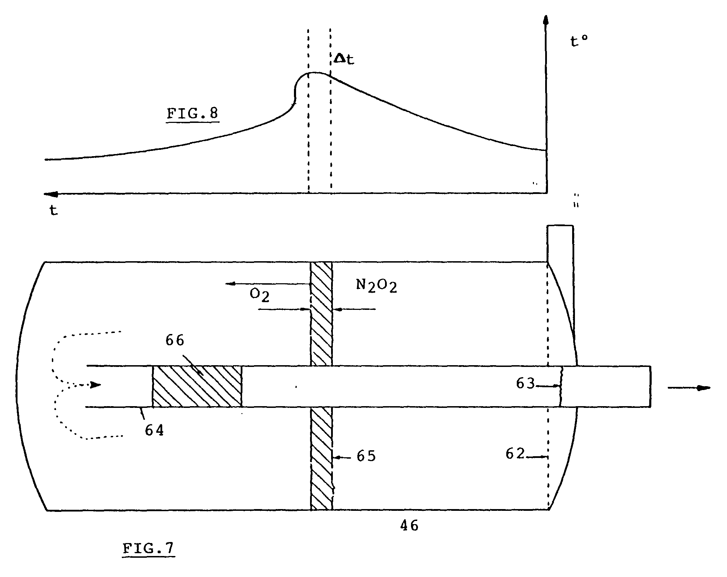

Les figures 7 et 8 illustrent les détails de réalisation d'une installation d'auto-pilotage d'un réacteur.

Le réacteur 46, muni d'une entrée d'air dans sa partie supérieure en volute, latérale ou non, est remplie de matière active d'adsorption, telle que la zéolite par exemple, laquelle se trouve sous la grille 62 et comporte une zone de captage de passage du front d'adsorption, telle qu'un tube plongeur 64, dont la partie supérieure est munie d'une grille 63. Dans le cas par exemple du tube plongeur 64, le front d'adsorption 65 se développe d'abord dans la zone annulaire autour du tube plongeur 64, il descend dans le bas du réservoir 46 pour ensuite remonter dans le tube plongeur 66 où sont présents des capteurs de pression et/ou de température. Ces capteur sont positionnés à une certaine distance de la partie supérieure du tube plongeur.

Le front d'adsorption est la zone de transfert de masse qui sépare les zones où il y a de l'oxygène et de l'azote de celle où il n'y a que de l'oxygène, ce front se déplaçant vers la sortie du réservoir.

Ce front est le lieu d'une élévation de température correspondant au passage de l'azote gazeux vers une phase pseudo-liquide, et est aussi le siège de variations de pression.

La mesure de ces modifications de température et/ou de pression permet par la simulation, par exemple d'une fonction de leur variation, de piloter l'appareil et d'actionner la rotation de la vanne déroulant d'un pas. Ce qui coupe automatiquement l'admission d'air, sans pollution de l'oxygène produit par des molécules d'azote présentes dans le front d'adsorption.

La valeur de la fonction résultant de cette mesure permet d'auto-contrôler le processus par l'emploi de la vanne déroulante qui répond extrêmement rapidement (moins d'une demi-seconde) tout en assurant un refoulement maximum de l'oxygène séparé dans le réservoir de stockage.

L'utilisation conjointe des vannes déroulantes et de la surveillance à but de pilotage des fronts d'adsorption permet d'optimaliser la consommation énergétique spécifique imputable à la séparation des produits, tout en utilisant des composants bon marché : vanne déroulante, réacteur de réalisation très simple, utilisation d'un minimum de zéolite, d'où poids de l'installation réduit.

Le dispositif de l'invention fonctionne en l'absence de toute graisse ou lubrifiant, en particulier pour les vannes, permettant donc la mise en oeuvre, même en présence de fortes concentrations d'oxygène.

Bien qu'on ait décrit une forme d'exécution particulière de l'invention, il est bien entendu que de nombreuses variantes opératoires peuvent être prévues.

## Revendications

1. Procédé de séparation de composants d'un mélange de gaz par adsorption sélective sur une matière adsorbante dans des réacteurs fonctionnant en cycles d'adsorption et de désorption séquentiels, comportant des étapes successives d'admission des gaz à traiter et de mise sous pression en vue de réaliser une adsorption sélective, un échappement préférentiel du composant moins adsorbé et une désorption au moins partielle à pression réduite du composé adsorbé préférentiellement, suivie de préférence d'une purge de désorption finale, **caractérisé en ce que** les phases d'adsorption et de désorption sont commandées à l'aide de vannes déroulantes (53, 54) montées dans des conduites (1, 32) ou des portions de circuit connectées au réacteur et qui contrôlent individuellement les admissions et les échappements de gaz nécessaires au fonctionnement du réacteur.

2. Procédé selon la revendication 1, **caractérisé en ce que** les phases d'adsorption et/ou de désorption sont commandées en fonction du front d'adsorption dans le réacteur.

3. Procédé selon la revendication 2, **caractérisé en ce que** le front d'adsorption est détecté en fonction des variations de température et/ou de pression dans le réacteur.

4. Dispositif de séparation de composants d'un mélange de gaz par adsorption sélective sur une matière adsorbante dans des réacteurs fonctionnant en cycles d'adsorption (E1, E2) et de désorption (E3, E4, E5) séquentiels, comportant des étapes successives d'admission des gaz à traiter et de mise sous pression en vue de réaliser une adsorption sélective, un échappement préférentiel du composant moins adsorbé et une désorption au moins partielle à pression réduite du composé adsorbé préférentiellement, suivie de préférence d'une purge de désorption finale, **caractérisé en ce que** les admissions et les échappements de gaz nécessaires à son fonctionnement sont commandés individuellement par une vanne (53, 54) qui est montée dans une conduite (1, 32) ou une portion de circuit, et qui est constituée par une paroi perforée, de préférence une grille à fines ouvertures (3) et par une membrane amovible (5) en un matériau souple, disposée sous forme d'une courroie qui est montée sur des poulies (13, 15), galets ou cylindres ou tout élément similaire, qui est disposée de manière qu'un des brins de ladite courroie (5) puisse recouvrir l'ensemble de la paroi perforée (3), la courroie (5) pouvant être montée soit librement, soit en étant entraînée par un dispositif de commande, en rotation sur les poulies (13, 15) et l'ensemble de la courroie (5) et de ses poulies (13, 15) pouvant effectuer un mouvement de translation depuis une position d'ouverture maximale libérant totalement les perforations jusqu'à une position de fermeture totale couvrant totalement les perforations.

5. Dispositif selon la revendication 4, **caractérisé en ce qu'**il comporte une vanne à une seule voie comportant une grille à fine ouverture (3) disposée dans un conduit et une ou plusieurs membranes amovibles (5) pouvant pivoter sur un axe (19).

6. Dispositif selon la revendication 4, **caractérisé en ce qu'**il comporte une vanne à voies multiples comportant plusieurs grilles à fine ouverture (33) et au moins une membrane amovible (5) et pouvant être déplacée par rotation pour couvrir différentes grilles (33).

7. Dispositif selon l'une quelconque des revendications 4 à 6, **caractérisé en ce que** le réacteur est composé d'un réservoir (46) muni d'une entrée d'air de préférence dans sa partie supérieure et rempli de matière active d'adsorption, ainsi que d'une zone de captage du front de d'adsorption dans ladite matière.

## Patentansprüche

1. Verfahren zur Trennung von Komponenten einer Gasmischung durch selektive Adsorption auf einem adsorbierenden Material in Reaktoren, die in sequentiellen Adsorptions- und Desorptionszyklen funktionieren, welche aufeinanderfolgende Vorgänge umfassen für die Zufuhr der zu behandelnden Gase sowie für das Unterdrucksetzen derselben zur Durchführung einer selektiven Adsorption, für ein bevorzugtes Ablassen der weniger stark adsorbierten Komponente und für eine mindestens teilweise Desorption unter vermindertem Druck der bevorzugt adsorbierten Verbindung, die vorzugsweise von einem Säuberungsvorgang durch Desorption abgeschlossen wird, **dadurch gekennzeichnet, dass** die Adsorptions- und Desorptionsvorgänge über Drehschieberabsperrarmaturen(53, 54) gesteuert werden, die in Leitungen (1, 32) oder in Abschnitten des Kreislaufs eingebaut sind, die am Reaktor angeschlossen sind und die individuell die Zufuhr und das Ablassen der zur Funktion des Reaktors notwendigen Gase regeln.

2. Verfahren gemäß Patentanspruch 1, **dadurch gekennzeichnet, dass** die Adsorptions- und/oder Desorptionsvorgänge in Abhängigkeit von der Adsorptionsfront im Reaktor gesteuert werden.

3. Verfahren gemäß Patentanspruch 2, **dadurch gekennzeichnet, dass** die Adsorptionsfront durch Temperatur- und/oder Druckveränderungen im Reaktor ausfindig gemacht wird.

4. Vorrichtung zur Trennung von Komponenten einer Gasmischung durch selektive Adsorption auf einem adsorbierenden Material in Reaktoren, die in sequentiellen Adsorptions- (E1, E2) und Desorptionszyklen (E3, E4, E5) ablaufen, welche aufeinanderfolgende Stufen umfassen für die Zufuhr der zu behandelnden Gase und für das Unterdrucksetzen derselben zur Durchführung einer selektiven Adsorption, für ein bevorzugtes Ablassen der weniger stark adsorbierten Komponente und für eine mindestens teilweise Desorption unter vermindertem Druck der bevorzugt adsorbierten Verbindung, die vorzugsweise von einem Säuberungsvorgang durch Desorption abgeschlossen wird, **dadurch gekennzeichnet, dass** die funktionsnotwendige Zufuhr und das Ablassen der Gase individuell durch eine Drehschieberabsperrarmatur (53, 54) gesteuert werden, die in eine Leitung (1, 32) oder in einen Abschnitt eines Kreislaufes eingebaut ist und die aus einer perforierten Wand besteht, vorzugsweise aus einem Gitter mit kleinen Öffnungen (3), und einer abnehmbaren, aus einem geschmeidigen Material bestehenden Membrane (5), welche in der Form eines Riemens ausgelegt ist, der auf Rollen (13, 15), Walzen oder Zylindern oder auf anderen ähnlichen Elementen aufmontiert ist, und der so angeordnet ist, dass einer der Stränge des Riemens (5) in der Lage ist die perforierte Wand (3) völlig abzudecken, wobei der Riemen (5) entweder frei aufmontiert sein kann oder angetrieben wird durch eine Steuervorrichtung in einer Rotation auf den Rollen (13, 15), wobei der aus dem Riemen (5) und seinen Rollen (13, 15) bestehende Komplex sich, ausgehend von einer maximalen Öffnungsposition, die die Löcher vollkommen freigibt, bis hin zu einer totalen Schließposition, die die Löcher vollkommen überdeckt, bewegen kann.

5. Vorrichtung gemäß Patentanspruch 4, **dadurch gekennzeichnet, dass** sie ein Einwegventil umfaßt, welches ein Gitter mit kleinen Öffnungen (3) aufweist und in einer Leitung angeordnet ist, während eine oder mehrere abnehmbare Membranen (5) um eine Achse (19) drehen können.

6. Vorrichtung gemäß Patentanspruch 4, **dadurch gekennzeichnet, dass** sie ein Mehrwegventil umfaßt, welches mehrere Gitter mit kleinen Öffnung (33) aufweist und mindestens eine abnehmbare Membrane (5), die durch Rotation verstellt werden kann, um verschiedene Gitter (33) abzudecken.

7. Vorrichtung gemäß irgendeinem der Patentansprüche 4 bis 6, **dadurch gekennzeichnet, dass** der Reaktor sich zusammensetzt aus einem Behälter (46), der mit einer Luftzufuhr, vorzugsweise in seinem oberen Teil, ausgestattet ist und der mit aktivem Adsorptionsmaterial gefüllt ist sowie eine Aufnahmezone der Adsorptionsfront in dem besagten Material aufweist.

## Claims

1. Process for separating components of a mixture of gases by selective adsorption onto an adsorbent material in reactors operating in sequential adsorption and desorption cycles, comprising successive steps of introduction of the gases to be treated and of pressurisation in order to achieve a selective adsorption, a preferential venting of the less adsorbed component and an at least partial desorption at reduced pressure of the compound preferentially adsorbed, preferably followed by a final desorption purging, **characterized in that** the adsorption and desorption phases are controlled by means of run-off valves (53, 54) mounted in pipes (1, 32) or circuit portions connected to the reactor and which individually control the introduction and venting operations of gases required for the reactor to operate.

2. Process according to Claim 1, **characterized in that** the adsorption and/or desorption phases are controlled as a function of the adsorption front in the reactor.

3. Process according to Claim 2, **characterized in that** the adsorption front is detected as a function of the variations in temperature and/or pressure in the reactor.

4. Device for separating components of a mixture of gases by selective adsorption onto an adsorbent material in reactors operating in sequential adsorption (E1, E2) and desorption (E3, E4, E5) cycles, comprising successive steps of introduction of the gases to be treated and of pressurization in order to achieve a selective adsorption, a preferential venting of the less adsorbed component and an at least partial desorption at reduced pressure of the compound preferentially adsorbed, preferably followed by a final desorption purging, **characterized in that** the introductions and ventings of gases required for the device to operate are individually controlled by means of a valve (53, 54) which is mounted in a pipe (1, 32) or a circuit portion, and which consists of a perforated wall, preferably a fine-mesh grille (3) and of a removable membrane (5) made of a flexible material, arranged in the form of a belt which is mounted on pulleys (13, 15), rollers or cylinders or any similar member, which is arranged such that one of the strands of the said belt (5) can cover all of the perforated wall (3), the belt (5) being able to be mounted either freely or by being driven by a control device, rotating on the pulleys (13, 15) and the combination of the belt (5) and its pulleys (13, 15) being able to carry out a translational motion from a fully open position, which frees the perforations completely, to a fully closed position, which covers the perforations completely.

5. Device according to Claim 4, **characterized in that** it comprises a one-way valve comprising a fine-mesh grille (3) arranged in a pipe and one or more removable membranes (5) which can pivot about an axis (19).

6. Device according to Claim 4, **characterized in that** it comprises a multi-way valve comprising several fine-mesh grilles (33) and at least one removable membrane (5), and which can be moved by rotation to cover different grilles (33).

7. Device according to any one of Claims 4 to 6, **characterized in that** the reactor is composed of a reservoir (46) fitted with an air inlet, preferably at the top, and filled with active adsorbent material, and also of a zone for sensing the adsorption front in the said material.
